# EUROPEAN PATENT SPECIFICATION

(11) **EP 1 521 394 B1**
(45) Date of publication and mention of the grant of the patent: **13.02.2008**
(21) Application number: 04255626.6
(22) Date of filing: 16.09.2004
(51) Int. Cl.: H04L 12/18, H04Q 7/38, H04Q 7/22, H04L 12/14

(54) **Method of initiating multimedia broadcast multicast services (MBMS)**
Verfahren zum Einleiten von Multimedia Broadcast Multicast Diensten (MBMS)
Procédé pour initier services de diffusion multimédia multidestination (MBMS)

(30) Priority: 30.09.2003 US 674720
(43) Date of publication of application: 06.04.2005
(73) Proprietor: Lucent Technologies Inc., Murray Hill, New Jersey 07974-0636 (US)
(72) Inventor: Hu, Tech, Budd Lake, New Jersey 07828 (US)
(74) Representative: Sarup, David Alexander

(56) References cited:
- EP-A- 1 309 213
- EP-A- 1 341 341
- EP-A- 1 353 523
- WO-A-02/13499
- WO-A-20/04032552
- 3RD GENERATION PARTNERSHIP PROJECT;: "Multimedia Broadcast/Multicast Service (MBMS); Architecture and Functional Description (Release 6)" TECHNICAL SPECIFICATION GROUP SERVICES AND SYSTEM ASPECTS, [Online] no. 3GPP TS 23.246 v.2.0.0, 29 September 2003 (2003-09-29), pages 1-37, XP002309741 INTERNET Retrieved from the Internet: URL:http://www.3gpp.org/ftp/Specs/html-inf o/23246.htm> [retrieved on 2004-12-09]

## Description

### BACKGROUND OF THE INVENTION

### I. FIELD OF THE INVENTION

The present invention relates to telecommunications, and more particularly, to wireless communications.

### II. DESCRIPTION OF THE RELATED ART

Wireless communications systems provide wireless service to a number of wireless or mobile units situated within a geographic region. The geographic region supported by a wireless communications system is divided into spatially distinct areas commonly referred to as "cells." Each cell, ideally, may be represented by a hexagon in a honeycomb pattern. In practice, however, each cell may have an irregular shape, depending on various factors including the topography of the terrain surrounding the cell. Moreover, each cell is further broken into two or more sectors. Each cell is commonly divided into three sectors, each having a range of 120 degrees, for example.

A conventional cellular system comprises a number of cell sites or base stations geographically distributed to support the transmission and reception of communication signals to and from the wireless or mobile units. Each cell site handles voice communications within a cell. Moreover, the overall coverage area for the cellular system may be defined by the union of cells for all of the cell sites, where the coverage areas for nearby cell sites overlap to ensure, where possible, contiguous communication coverage within the outer boundaries of the system's coverage area.

Each base station comprises at least one radio and at least one antenna for communicating with the wireless units in that cell. Moreover, each base station also comprises transmission equipment for communicating with a Mobile Switching Center ("MSC"). A mobile switching center is responsible for, among other things, establishing and maintaining calls between the wireless units, between a wireless unit and a wireline unit through a public switched telephone network ("PSTN"), as well as between a wireless unit and a packet data network ("PDN"), such as the Internet. A base station controller ("BSC") administers the radio resources for one or more base stations and relays this information to the MSC.

When active, a wireless unit receives signals from at least one base station over a forward link or downlink and transmits signals to at least one base station over a reverse link or uplink. Several approaches have been developed for defining links or channels in a cellular communication system, including time-division multiple access ("TDMA"), code-division multiple access ("CDMA") and orthogonal-frequency division multiple access ("OFDMA"), for example.

In TDMA communication systems, the radio spectrum is divided into time slots. Each time slow allows only one user to transmit and/or receive. Thusly, TDMA requires precise timing between the transmitter and receiver so that each user may transmit their information during their allocated time.

In a CDMA scheme, each wireless channel is distinguished by a distinct channelization code (e.g., spreading code, spread spectrum code or Walsh code). Each distinct channelization code is used to encode different information streams. These information streams may then be modulated at one or more different carrier frequencies for simultaneous transmission. A receiver may recover a particular stream from a received signal using the appropriate channelization code to decode the received signal.

In OFDMA systems, a carrier signal may be defined by a number (e.g., 1024) of sub-carriers or tones transmitted using a set of mathematically time orthogonal continuous waveforms. Each wireless channel may be distinguished by a distinct channelization tone. By employing orthogonal continuous waveforms, the transmission and/or reception of the tones may be achieved, as their orthogonality prevents them from interfering with one another.

With the explosion of wireless telephony, service providers have been exploring new growth opportunities. One such prospect has centered on providing multimedia content to subscribing wireless users anywhere within cell coverage through multicasting services. For the purposes of the present disclosure, multicasting corresponds with the transmission of content by one source to multiple receivers having privileges (e.g., subscribers). In one example, multimedia content, such as streaming video and/or audio, may be multicast from an entertainment or news service provider to subscribers through the wireless communications network using MBMS.

A conventional secure billing system is described in Xu, et al (EP 1 341 341). Xu describes a multicast a server that may announce available multicast sessions to a user terminal. The announcement may include a list of available multicast sessions, a starting time for each multicast session, and a cost associated with each multicast session. An operator of the user terminal may then select a multicast session from the list. A conventional multimedia broadcast/multicast service (MBMS) is described in the 3GPP Technical Specification 23.246 V.2.0.0. Koulakiotis (EP 1 309 213) describes techniques for providing pre-paid MBMS services. Koulakiotis describes sending configuration information, such as prepaid fees, to user equipment, which may use the received configuration information to determine what kind of services it can receive.

Multicast services, however, raise issues regarding the capabilities of the subscriber. To access and receive multicast services, such as MBMS, each subscriber should have a wireless unit (e.g., user equipment) supportive of such featured services. For example, the wireless unit of a subscriber should have a display to convey receive multimedia content to the user. More particularly, each subscriber should have sufficient available channelization codes to access and receive multicast services. Consequently, each subscriber may have the appropriate privilege(s), yet lack other requirements to successfully access and receive a multicast service, such as MBMS.

Consequently, a demand exists for a method of initiating a multicast service, including MBMS, to a subscriber. More particularly, a need exists for a signaling technique to enable a subscriber with the appropriate privilege(s) to determine if the subscriber has sufficient supportive requirements to successfully access and receive a multicast service, such as MBMS.

### SUMMARY OF THE INVENTION

The present invention provides a method of initiating a multicast service, including MBMS, to a subscriber. More particularly, the method of the present invention provides a signaling technique to enable the determination as to whether a subscriber with the appropriate privilege(s) has sufficient supportive requirements to successfully access and receive a multicast service, such as MBMS. For the purposes of the present disclosure, a signaling technique may correspond to a message transmitted between a subscriber and its associated network infrastructure that may initiate a multicast service, such as MBMS. In the present disclosure, a multicast service may correspond to the transmission of particular content by one source to multiple receivers having privileges (e.g., subscribers) at an assigned multicast rate.

In an exemplary embodiment, a method of wireless communication is provided. The method may include receiving a multicast control message (220) at a user equipment and selecting a multicast service in response to the received multicast control message, wherein the multicast control message is announced by a multicast server characterized in that the multicast control message is indicative of at least one supportive requirement associated with at least one of a plurality of multicast services, the at least one supportive requirement indicative of a user equipment power utilization required to support said at least one of the plurality of multicast services.

In another exemplary embodiment, a method of wireless communication is provided. The method may include receiving subscription information (210) from a user equipment and transmitting to the user equipment a multicast control message in response to the received subscription information, wherein the multicast control message is announced by a multicast server, characterized in that the multicast control message is indicative of at least one supportive requirement associated with at least one of a plurality of multicast services, the at least one supportive requirement indicative of a user equipment power utilization required to support at least one of the plurality of multicast services.

These and other embodiments will become apparent to those skilled in the art from the following detailed description read in conjunction with the appended claims and the drawings attached hereto.

### BRIEF DESCRIPTION OF THE DRAWINGS

The present invention will be better understood from reading the following description of non-limiting embodiments, with reference to the attached drawings, wherein below:
**FIG. 1** depicts a flow chart according to one embodiment of the present invention; and
**FIG. 2** depicts a flow chart according to another embodiment of the present invention.

It should be emphasized that the drawings of the instant application are not to scale but are merely schematic representations, and thus arc not intended to portray the specific dimensions of the invention, which may be determined by skilled artisans through examination of the disclosure herein.

### DETAILED DESCRIPTION

The present invention provides a method of initiating a multicast service, including MBMS, to a subscriber. More particularly, the method of the present invention provides a signaling technique to enable the determination as to whether a subscriber with the appropriate privilege(s) has sufficient supportive requirements to successfully access and receive a multicast service, such as MBMS. For the purposes of the present disclosure, a signaling technique may correspond to a message transmitted between a subscriber and its associated network infrastructure that may initiate a multicast service, such as MBMS. In the present disclosure, a multicast service may correspond to the transmission of particular content by one source to multiple receivers having privileges (e.g., subscribers) at an assigned multicast rate.

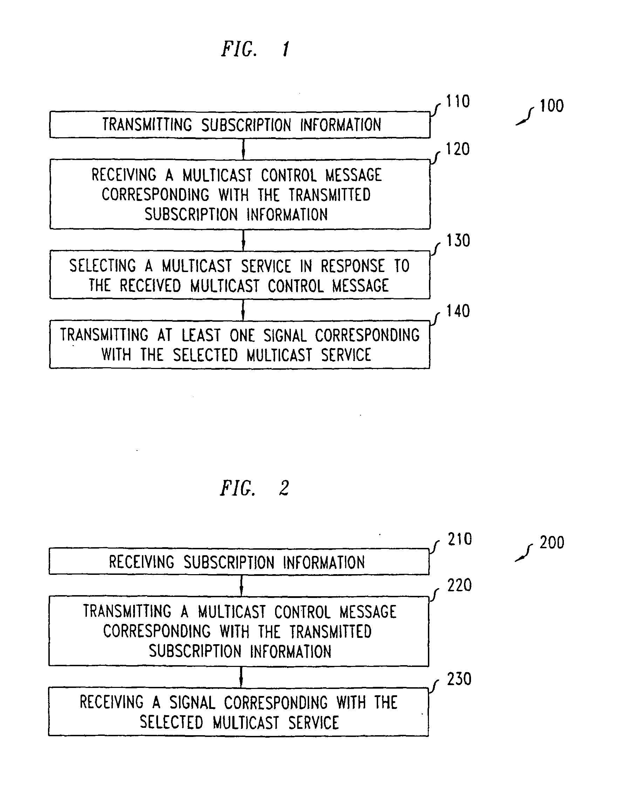

Referring to **FIG. 1**, an exemplary flow chart **100** of an embodiment of the present invention is illustrated. More particularly, flow chart **100** depicts a method of signaling to enable the determination as to whether a subscriber with the appropriate privilege(s) has sufficient supportive requirements to successfully access and receive a multicast service, such as MBMS. With this determination, the subscriber, for example, may select a multicast service, or, in the alternative, opt out from accessing and receiving a multicast service(s).

Moreover, a multicast service may be defined herein as a subscription-based service having two or more tiers of service, such as, for example, basic and premium multicast services. Each multicast service may correspond with one of several multicast streams of content and/or one of several rates in which the stream(s) of content may be multicast. For example, a basic service may offer monochrome images at a first multicast rate, while the premium service may offer streaming color images at a second multicast rate relatively higher than the first multicast rate. Consequently, in one embodiment, the method of the present invention may provide each subscriber with the ability to alter the service selected, thereby scaling the service upward or down (e.g., from basic to premium and/or from premium to basic) in response to the multicast control message, for example.

The method corresponding with flow chart **100** initially transmits subscription information from the subscriber to the wireless network (step 110). Subscription information may include various data associated with the subscriber. The subscription information may include, for example, a multicast service plan such as subscription type, payment authentication data, and/ or billing information. Multicast subscription type here may correspond with a pre-designated multicast service preference.

The step of transmitting subscription information may be realized by any one of a number of means. For example, upon logging into the network, each subscriber within the cell may convey its subscription(s) to a corresponding base station. This subscription information may then be transmitted to a base station controller, which, in turn, may transmit this information to a mobile switching center. Alternatively, the subscription information may be transmitted from the subscriber's user equipment to a UMTS Terrestrial Radio Access Network ("UTRAN").

Once the subscription information is transmitted, the method includes the step of receiving a multicast control message (step **120**). The multicast control message may correspond with the transmitted subscription information. More particularly, the multicast control message may include various data for the subscriber to determine if it has sufficient supportive requirements to successfully access and receive the multicast service. In one embodiment, the subscriber may autonomously begin receiving multicast content based on the multicast control message to conserve the resources of the user equipment. For a subscriber to properly react to the availability of different multicast services, this multicast control message may be transmitted by a radio network controller ("RNC") to the user equipment. This multicast control message may be carried over a MBMS control channel ("MCCH") using the radio resource control ("RRC").

Each multicast control message may include one or more resource thresholds for each available multicast service. Exemplary operative resource thresholds established may correspond with allocated power from the subscriber's user equipment (e.g., required E_{c}/I_{oc}) and/or a block error rate ("BLER"). For example, if the allocated power threshold were defined in a multicast control message as fifty percent (50%) to support a premium service, while the necessary power to support a basic service was established at twenty percent (20%), then the subscriber may assess it own power utilization. Thusly, if the subscriber determined its power utilization was at thirty percent (30%), then the user equipment may determine to pursue the basic service, in contrast to a determination of sixty percent (60%), which might lead the subscriber to select the premium service, assuming privilege.

Moreover, each multicast control message may also include at least one identifier. Each multicast service may have one or more identifiers associated thereto. Likewise, each identifier may correspond with at least one available multicast rate. Here, at least one multicast rate may be assigned to a multicast service. This may be the result of any number of different techniques, including rate splitting. For the purposes of the present disclosure, rate splitting may correspond with dividing a service into different grades of quality and/or content and/ or multicast rates. It should also be noted that each multicast rate, for the purposes of the present disclosure, might correspond with one of several multicast streams of content and/or one of several rates in which the stream(s) of content may be multicast. In an illustrative example of rate splitting for multicast services, a basic service and a premium service may be created from an original multicast service, where the basic service may offer monochrome images at a first multicast rate, while the premium service may offer streaming color images at a second multicast rate relatively higher than the first multicast rate. Consequently, one or more multicast rates may be assigned by the network infrastructure to each multicast service, wherein a basic multicast service offering monochrome images may have an assigned 12 kB/s multicast rate, while a premium multicast service may offer streaming color images at an assigned multicast rate of 36 kB/s.
The multicast control message may include the number of available multicast services. From this information the subscriber may attempt to match its subscription to the available multicast services. To simplify the selection and lessen the burden on the network infrastructure, the number of available multicast services may be prioritized. For example, time sensitive multicast content may take a higher priority over content that is time-insensitive. Moreover, basic service may be given priority over premium service, while or premium service may be given priority over basic service. The motivations for prioritizing multicast services may include, for example, increased connectivity and/ or increased subscription fees.

Further, the multicast control message may also include at least one radio access capability requirement for each available multicast service. Here, a RNC with the wireless network infrastructure may construct required radio access capability information from the subscriber for each multicast service based on quality of service ("QoS") parameters established carried by a core network ("CN"). If the subscriber meets the radio access capability requirements for a multicast service, the subscriber may then access one or more multicast services. However, if the radio access capability requirements are not met, the subscriber may be forced to abort access to one or more multicast services.

The multicast control message may additionally include information associated with the status of the multicast service. The multicast control message may, for example, notify the subscriber that one or more of the multicast services may have been terminated. Likewise, the multicast control message may include notification of the continuation of one or more of the multicast services.

It should be noted that the multicast control message might be received by the subscriber's user equipment from the network infrastructure, such as the UTRAN, at one of a number of alternative times. Firstly, the multicast control message may be received during the setup of a multicast service. In so doing, the subscriber may be enabled to receive the multicast control message before initiating the first reception of content from the multicast service. For example, a multicast service availability message may thus be generated by the RNC to inform the subscriber of the availability of multicast services in a cell. Alternatively, multicast control message may be received in real time. Here, the information associated with the multicast control message may enable the re-configuration of parameters to react to the changing service parameters and/ or changing radio conditions. For example, the priority list of multicast services may change, the cell size may change so that different power fraction values may be associated with each multicast service, and/ or subscription information may change necessitating the RNC to terminate and/or continue multicasting of one particular service.

Subsequent to the reception of the multicast control message, the method may cause the selection of a multicast service (step **130**). Selecting a multicast service may be based on one or more of the parameters provided within the multicast control message. Moreover, the multicast service selection may also be based on the management of the subscriber's internal resources. In this scenario, the subscriber may elect one multicast service to maximize performance, or, alternatively, select another multicast service to support presently or soon to be employed other wireless services.

As a consequence of the above steps, the present method provides a multicast subscriber with a set of parameters to initiate the transfer of multimedia content, for example, through the access of multicasting services. Various circumstances may arise where a multicast subscriber may select a multicast service beneath its subscription privileges. This scaling downwards, for example, may be brought on by various factors detailed herein, for example. In such conditions, the subscriber may seek a credit from the multicast service provider for its associated subscription. Similarly, if the subscriber chooses to scale its subscription privileges upwards, multicast service provider may seek to quantify an appropriate charging scheme.

By way of either of the hereinabove scenarios, the method may include the step of transmitting one or more signals corresponding with the selected multicast service (step **140**). This signal(s) may be transmitted from the subscriber to the network infrastructure (e.g., UTRAN). To properly track credits (e.g., scaling down) or service charges (e.g., scaling up), the signal(s) may convey access time information associated with the multicast service selected.

Referring to **FIG. 2**, an exemplary flow chart **200** of another embodiment of the present invention is illustrated. More particularly, flow chart **200** depicts a method of signaling for determining if a subscriber with the appropriate privilege(s) has sufficient supportive requirements to successfully access and receive a multicast service, such as MBMS. With this determination, the subscriber, for example, may select a multicast service, or, in the alternative, opt out from accessing and receiving a multicast service(s).

The method corresponding with flow chart **200** initially receives subscription information from the subscriber (step **210**). Subscription information may comprise various data associated with the subscriber, such as, for example, a multicast service plan including as subscription type, payment authentication data, and/or billing information. Multicast subscription type here may correspond with a pre-designated multicast service preference.

The step of receiving subscription information may be accomplished by using any one of a number of alternatives. In one example, a base station may receive the associated subscriptions for each subscriber within the cell upon logging into the wireless network. This subscription information may then be relayed to a base station controller, which, in turn, may re-transmit this information to a mobile switching center. Alternatively, the subscription information may be received by a UTRAN from the subscriber.

Thereafter, the method provides for the step of transmitting a multicast control message (step **220**). The multicast control message may correspond with the received subscription information. More particularly, the multicast control message may include various data for the subscriber to determine if it has sufficient supportive requirements to successfully access and receive the multicast service. The multicast control message may be transmitted by an RNC to the user equipment so a subscriber may properly react to the availability of different multicast services. This multicast control message may be carried over the MCCH using the RRC.

Each multicast control message may include at least one or resource threshold for each available multicast service. Exemplary operative resource thresholds established may correspond with allocated power from the subscriber's user equipment (e.g., required E_{c}/I_{oc}) and/or a block error rate ("BLER"). In one example, if the allocated power threshold were defined in a multicast control message as fifty percent (50%) to support a premium service, while the necessary power to support a basic service was established at twenty percent (20%), then the subscriber may assess it own power utilization. Thusly, if the subscriber determined its power utilization was at thirty percent (30%), then the user equipment may determine to pursue the basic service, in contrast to a determination of sixty percent (60%), which might lead the subscriber having the appropriate privilege to select the premium service.

Further, each multicast control message may also include at least one identifier. Each multicast service may have one or more identifiers associated thereto. Likewise, each identifier may correspond with at least one available multicast rate. Here, at least one multicast rate may be assigned to a multicast service. This may be the result of any number of different techniques, including rate splitting.

The multicast control message may also include the number of available multicast services. From this information the subscriber may attempt to match its subscription to the available multicast services. To simplify the selection and lessen the burden on the network infrastructure, the number of available multicast services may be prioritized.

Moreover, the multicast control message may also include at least one radio access capability requirement for each available multicast service. Here, an RNC with the wireless network infrastructure may construct required radio access capability information from the subscriber for each multicast service based on QoS parameters established carried by the CN. If the subscriber meets the radio access capability requirements for a multicast service, the subscriber may then access one or more multicast services. However, if the radio access capability requirements are not met, the subscriber may be forced to abort access to one or more multicast services.

The multicast control message may additionally include information associated with the status of the multicast service. The multicast control message may, for example, notify the subscriber that one or more of the multicast services may have been terminated. Likewise, the multicast control message may include notification of the continuation of one or more of the multicast services.

After the multicast control message is transmitted, a multicast subscriber may initiate the transfer of multimedia content, for example, through access of multicasting services. Once access has been initiated, the network infrastructure (e.g., UTRAN) may require feedback from the subscriber. This feedback may include the step of receiving one or more signals corresponding with the selected multicast service by each subscriber (step **230**). Each feedback signal may provide the attributes of a corresponding subscriber to inform the UTRAN of service usage. More particularly, the feedback signal may convey access time information associated with the multicast service selected by the subscriber. Consequently, each feedback signal may also convey whether the subscriber scaled their service downward (e.g., from premium to basic) to provide credits to the subscriber's account, and/or whether the subscriber scaled their service upward (e.g., from basic to premium) to add service charges to the subscriber's account.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as the wireless unit, the base station, a base station controller and/or mobile switching center, and employed in conjunction with various multiple access schemes, such as CDMA and OFDMA, for example. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the spirit and scope of the present invention. It is therefore contemplated that the appended claims will cover any such modifications or embodiments as fall within the true scope of the invention.

## Claims

1. A method of wireless communication comprising receiving a multicast control message (220) at a user equipment and selecting a multicast service in response to the received multicast control message, wherein the multicast control message is announced by a multicast server,
**CHARACTERIZED IN THAT :**
the multicast control message is indicative of at least one supportive requirement associated with at least one of a plurality of multicast services, said at least one supportive requirement indicative of a user equipment power utilization required to support said at least one of the plurality of multicast services.

2. The method of Claim 1, comprising:
transmitting subscription information (110) corresponding with the received multicast control message.

3. A method of wireless communication comprising receiving subscription information (210) from a user equipment and transmitting to the user equipment a multicast control message in response to the received subscription information, wherein the multicast control message is announced by a multicast server, **CHARACTERIZED IN THAT**:
the multicast control message is indicative of at least one supportive requirement associated with at least one of a plurality of multicast services, said at least one supportive requirement indicative of a user equipment power utilization required to support said at least one of the plurality of multicast services.

4. The method of Claims 1 or 3, wherein the subscription information comprises at least one of multicast subscription type, payment authentication data, and billing information.

5. The method of Claims 1 or 3, wherein each multicast service corresponds with at least one multicast rate.

6. The method of Claim 5, wherein the multicast service is selected in response to at least one subscriber resource.

7. The method of Claim 5, comprising at least one of:
transmitting at least one feedback signal corresponding with the selected multicast service; and
receiving at least one feedback signal corresponding with the selected multicast service;
wherein the at least one feedback signal conveys an access time to the selected multicast service.

8. The method of Claim 5, wherein the multicast control message comprises at least one of:
a number of available multicast services;
at least one resource threshold for each available multicast service;
at least one identifier for each available multicast service;
at least one radio access capability requirement for each available multicast service; and
notification of at least one of termination and continuation of multicast service.

9. The method of Claim 8, wherein each of the number of multicast services corresponds with at least one multicast rate, the number of available multicast services are prioritized, and the at least one resource threshold corresponds with at least one of allocated power and block error rate BLER.

10. The method of Claim 8, wherein the at least one identifier corresponds with at least one multicast rate associated with each of the number of available multicast services.

## Patentansprüche

1. Verfahren der drahtlosen Kommunikation mit Empfangen einer Multicast-Steuernachricht (220) in einer Benutzereinrichtung und Auswählen eines Multicast-Dienstes als Reaktion auf die empfangene Multicast-Steuernachricht, wobei die Multicast-Steuernachricht durch einen Multicast-Server angekündigt wird,
**dadurch gekennzeichnet, daß**
die Multicast-Steuernachricht mindestens ein mindestens einem einer Mehrzahl von Multicast-Diensten zugeordnetes Unterstützungserfordernis anzeigt, wobei das mindestens eine Unterstützungserfordernis eine Benutzereinrichtungsleistungsnutzung anzeigt, die zum Unterstützen des mindestens einen der Mehrzahl von Multicast-Diensten erforderlich ist.

2. Verfahren nach Anspruch 1, mit Übertragen von der empfangenen Multicast-Steuernachricht entsprechenden Teilnahmeinformationen (110).

3. Verfahren der drahtlosen Kommunikation mit Empfangen von Teilnahmeinformationen (210) von einer Benutzereinrichtung und Übertragen einer Multicast-Steuernachricht zu der Benutzereinrichtung als Reaktion auf die empfangenen Teilnahmeinformationen, wobei die Multicast-Steuernachricht durch einen Multicast-Server angekündigt wird, **dadurch gekennzeichnet, daß** die Multicast-Steuernachricht mindestens ein mindestens einem einer Mehrzahl von Multicast-Diensten zugeordnetes Unterstützungserfordernis anzeigt, wobei das mindestens eine Unterstützungserfordernis eine Benutzereinrichtungsleistungsnutzung anzeigt, die zum Unterstützen des mindestens einen der, Mehrzahl von Multicast-Diensten erforderlich ist.

4. Verfahren nach Ansprüchen 1 oder 3, wobei die Teilnahmeinformationen mindestens eines von Multicast-Teilnahmeart, Zahlungsauthentifizierungsdaten und Gebühreninformationen umfaßt.

5. Verfahren nach Ansprüchen 1 oder 3, wobei jeder Multicast-Dienst mindestens einer Multicast-Rate entspricht.

6. Verfahren nach Anspruch 5, wobei der Multicast-Dienst als Reaktion auf mindestens eine Teilnehmer-Ressource ausgewählt wird.

7. Verfahren nach Anspruch 5, mit mindestens einem von:
Übertragen mindestens eines dem ausgewählten Multicast-Dienst entsprechenden Rückmeldesignals; und
Empfangen mindestens eines dem ausgewählten Multicast-Dienst entsprechenden Rückmeldesignals;
wobei das mindestens eine Rückmeldesignal eine Zugangszeit zu dem ausgewählten Multicast-Dienst übermittelt.

8. Verfahren nach Anspruch 5, wobei die Multicast-Steuernachricht mindestens eines vom folgenden umfaßt:
eine Anzahl verfügbarer Multicast-Dienste mindestens einen Ressourcenschwellwert für jeden verfügbaren Multicast-Dienst;
mindestens eine Kennung für jeden verfügbaren Multicast-Dienst;
mindestens ein Funkzugangsfähigkeitserfordernis für jeden verfügbaren Multicast-Dienst; und
Benachrichtigung von mindestens einem von Abschluß und Fortführung von Multicast-Dienst.

9. Verfahren nach Anspruch 8, wobei jeder der Anzahl von Multicast-Diensten mindestens einer Multicast-Rate entspricht, die Anzahl verfügbarer Multicast-Dienste priorisiert ist und der mindestens eine Ressourcenschwellwert mindestens einem von zugeteilter Leistung und Blockfehlerrate BLER entspricht.

10. Verfahren nach Anspruch 8, wobei die mindestens eine Kennung mindestens einer, jedem der Anzahl von verfügbaren Multicast-Diensten zugeordneten Multicast-Rate entspricht.

## Revendications

1. Procédé de communication sans fil comprenant la réception d'un message de commande de multidiffusion (220) au niveau d'un équipement d'utilisateur et la sélection d'un service de multidiffusion en réponse au message de commande de multidiffusion reçu, dans lequel le message de commande de multidiffusion est annoncé par un serveur de multidiffusion, **CARACTERISE EN CE QUE** :
le message de commande de multidiffusion est indicatif d'au moins un besoin de support associé à au moins l'un d'une pluralité de services de multidiffusion, ledit au moins un besoin de support étant indicatif d'une utilisation de puissance d'équipement d'abonné nécessaire pour supporter ledit au moins un de la pluralité de services de multidiffusion.

2. Procédé selon la revendication 1, comprenant :
la transmission d'informations d'abonnement (110) correspondant au message de commande de multidiffusion reçu.

3. Procédé de communication sans fil comprenant la réception d'informations d'abonnement (210) depuis un équipement d'utilisateur et la transmission à l'équipement d'utilisateur d'un message de commande de multidiffusion en réponse aux informations d'abonnement reçues, dans lequel le message de commande de multidiffusion est annoncé par un serveur de multidiffusion, **CARACTERISE EN CE QUE** :
le message de commande de multidiffusion est indicatif d'au moins un besoin de support associé à au moins l'un d'une pluralité de services de multidiffusion, ledit au moins un besoin de support étant indicatif d'une utilisation de puissance d'équipement d'abonné nécessaire pour supporter ledit au moins un de la pluralité de services de multidiffusion.

4. Procédé selon la revendication 1 ou 3, dans lequel les informations d'abonnement comprennent au moins l'un d'un type d'abonnement de multidiffusion, de données d'authentification de paiement, et d'informations de facturation.

5. Procédé selon la revendication 1 ou 3, dans lequel chaque service de multidiffusion correspond à au moins un débit de multidiffusion.

6. Procédé selon la revendication 5, dans lequel le service de multidiffusion est sélectionné en réponse à au moins une ressource d'abonné.

7. Procédé selon la revendication 5, comprenant au moins l'une de :
la transmission d'au moins un signal de contre-réaction correspondant au service de multidiffusion sélectionné ; et
la réception d'au moins un signal de contre-réaction correspondant au service de multidiffusion sélectionné ;
dans lequel l'au moins un signal de contre-réaction communique un temps d'accès au service de multidiffusion sélectionné.

8. Procédé selon la revendication 5, dans lequel le message de commande de multidiffusion comprend au moins l'un :
d'un nombre de services de multidiffusion possibles ;
d'au moins un seuil de ressource pour chaque service de multidiffusion possible ;
d'au moins un identifiant de chaque service de multidiffusion possible ;
d'au moins un besoin de capabilité d'accès radio pour chaque service de multidiffusion possible ; et
d'une notification d'au moins une terminaison et d'une continuation du service de multidiffusion.

9. Procédé selon la revendication 8, dans lequel chacun du nombre de services de multidiffusion correspond à au moins un débit de multidiffusion, le nombre de services de multidiffusion possibles reçoit une priorité et l'au moins un seuil de ressource correspond à au moins l'un d'une puissance attribuée et d'un taux d'erreurs sur les blocs BLER.

10. Procédé selon la revendication 8, dans lequel l'au moins un identifiant correspond à au moins un débit de multidiffusion associé à chacun du nombre de services de multidiffusion possibles.
